# FASCICULE DE BREVET EUROPEEN

(11) **EP 0 486 372 B1**
(45) Date de publication et mention de la délivrance du brevet: **04.05.1994**
(21) Numéro de dépôt: 91403006.9
(22) Date de dépôt: 08.11.1991
(51) Int. Cl.: F16K 21/10, F16K 5/06

(54) **Dispositif de commande d'une vanne comportant un ressort spiral**
Ventilsteuervorrichtung mit einer Spiralfeder
Valve operating device having a spiral spring

(30) Priorité: 14.11.1990 FR 9014136; 11.10.1991 FR 9112520
(43) Date de publication de la demande: 20.05.1992
(73) Titulaire: SOCIETE ANONYME MECAFRANCE, F-95310 Saint-Ouen-L'Aumone (FR)
(72) Inventeur: Maurer, Daniel Pierre, F-78540 Vernouillet (FR)
(74) Mandataire: Vander-Heym, Serge

(56) Documents cités:
- AU-B- 27 399
- DE-B- 1 031 070
- FR-A- 2 640 024
- US-A- 3 422 843

## Description

La présente invention est relative à des perfectionnements aux dispositifs de commande des vannes du genre de ceux dans lesquels l'arbre d'entraînement du boisseau est commandé dans un sens, par un levier de manoeuvre et, dans l'autre, par la détente d'un ressort spiral.

L'état de la technique en la matière peut être illustré par le dispositif décrit dans la demande de brevet français publié sous le n°2640024 (cf. le préambule de la revendication 1).

Dans un tel dispositif le ressort spiral est enfermé dans un boîtier en deux parties, fixé sur le corps de la vanne, l'une des extrémités du ressort étant fixée à l'arbre entraîné par le levier de manoeuvre et, l'autre, étant fixée audit boîtier.

A l'expérience, on a remarqué que les opérations d'ouverture et de fermeture étaient trop rapides. On a constaté, notamment, que lors de la fermeture, sous l'action du ressort, il se produisait des chocs susceptibles d'entraîner des effets destructifs.

Par le document AU-B-27399 (1971) on connait un dispositif permettant de ralentir la rotation d'une vanne, ce dispositif concourant à freiner la rotation d'une palette baignant dans un fluide en prévoyant des orifices dans ladite palette. Ce dispositif ne donne pas satisfaction car le freinage est constant.

La présente invention, qui remédie à ces inconvénients est relative à un dispositif de commande d'une vanne comportant un ressort spiral, dont la détente provoque la rotation de l'arbre d'entraînement du boisseau de la vanne, caractérisé en ce que l'arbre d'entraînement de l'arbre comporte un piston disposé dans un logement étanche renfermant un fluide visqueux, ledit piston et ledit logement délimitant en coopération quatre chambres dont le volume varie lors de la rotation dudit piston ainsi que deux orifices dont la section est très réduite en fin de course dudit piston, de façon à freiner le passage du fluide d'une chambre à l'autre.

La présente invention sera mieux comprise par la description qui va suivre faite en se référant aux dessins annexés à titre d'exemple indicatif seulement sur lesquel :
- la figure 1 est une vue en coupe verticale d'un dispositif conforme à l'invention ;
- la figure 2 est une vue, en coupe, effectuée selon la ligne II-II de la figure 1;
- la figure 3 est une vue analogue à la figure 1, montrant un autre mode de réalisation ;
- la figure 4 est une vue en coupe, effectuée selon la ligne IV-IV de la figure 3.

En se reportant aux dessins et selon un mode de réalisation, on voit que 1 schématise le corps de la vanne et que 2 constitue l'extrémité supérieure de l'arbre d'entraînement du boisseau.

De la façon connue, l'arbre 2 est entraîné par un arbre auxiliaire 3, ou arbre de manoeuvre, dont la rotation est déterminée dans un sens, par une action sur un levier 4 et, dans l'autre, par un ressort spiral 5.

Le ressort 5 est relié, par une de ses extrémités à l'arbre 3 et, par l'autre, à un boîtier rendu solidaire du corps 1 de la vanne par l'entremise de vis, dont les axes sont schématisés en 6.

Le boîtier est réalisé en deux parties 7 et 8 assemblées par des vis dont les axes sont schématisés en 9. En ce qui concerne le réglage de la tension initiale du ressort, on se reportera, utilement, à la demande de brevet français publiée n°2640024.

Selon l'invention, l'arbre 3 entraîne un piston 10 logé dans un évidement du fond de la partie 8 du boîtier. L'évidement est obturé, de façon étanche, par un couvercle 11 disposé contre le fond de la partie 8. Le couvercle 11 peut être fixé à l'aide de vis (non représentées).

L'évidement, le piston 10 et le couvercle 11 délimitent quatre chambres 12a,12b et 13a,13b à volume variable, contenant un liquide visqueux, tel que de la graisse.

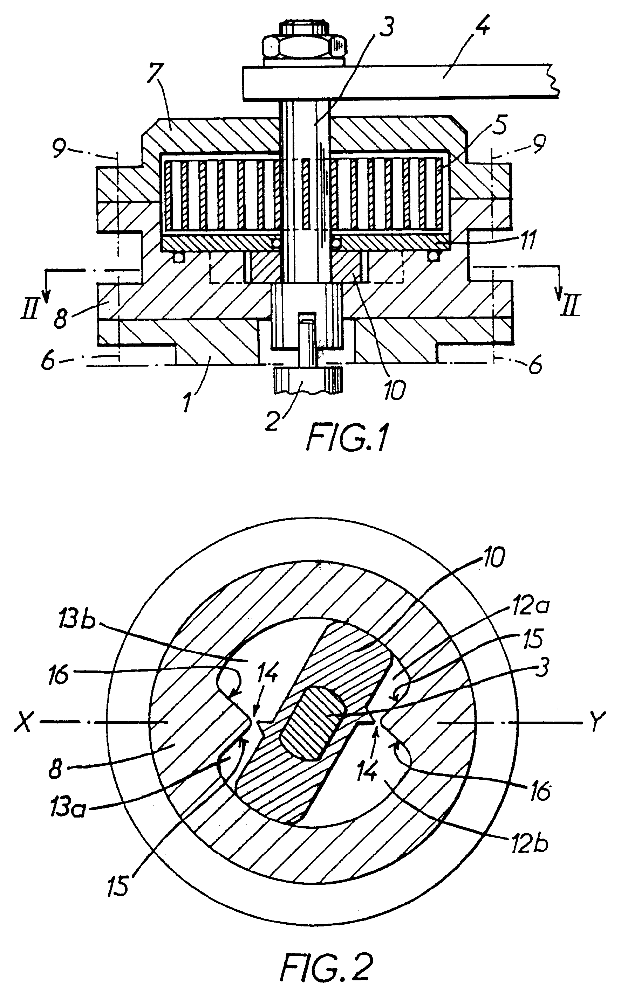

Comme cela ressort de la figure 2, les profils donnés à l'évidement et au piston 10 sont tels que, lors de la rotation dudit piston et, tout particulièrement en fin de course, les chambres 12a et 12b ainsi que celles 13a et 13b communiquent entre elles par un orifice 14 dont la section est très réduite.

La section réduite de l'orifice 14 a pour effet de retarder le passage du fluide d'une chambre à l'autre et, par suite, de ralentir la rotation de l'arbre 3.

Il faut noter que cette action a lieu quel que soit le sens de rotation de l'arbre 3.Le dispositif de l'invention a donc l'avantage de protéger le dispositif contre une détente trop brutale du ressort. La protection est aussi efficace lors d'une action trop brutale sur le levier 4.

Il faut noter aussi que, si par une rotation de la partie 7 par rapport à celle 8, on modifie la tension du ressort cette action est sans effet sur la position du levier 4 qui, en position d'ouverture, doit s'étendre parallèlement à l'axe de la vanne schématisé en XY sur la figure 2.

Dans cette position, le piston 10 est en appui contre les flans 15 des chambres 12a et 13a. En position de fermeture, le piston 10 est en appui contre les flans 16 des chambres 13a et 13b.

Il ressort de cette explication que le piston 10 constitue aussi une butée mobile limitant la rotation du levier 4, à 90° dans l'exemple représenté.

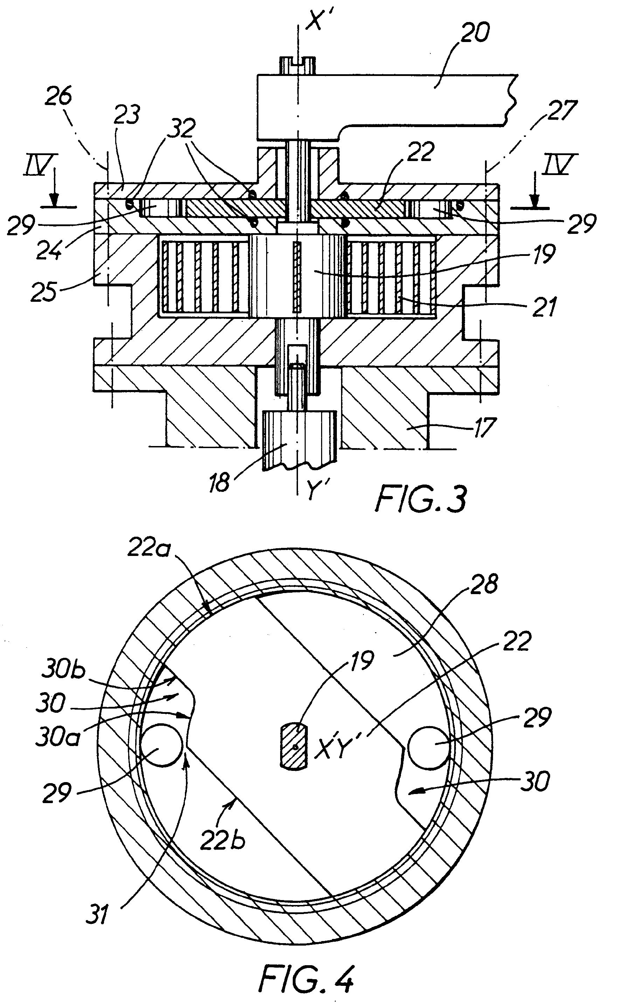

Les figures 3 et 4 montrent un autre mode de réalisation.

En se reportant aux figures 3 et 4, on voit que 17 schématise le corps de la vanne et que 18 constitue l'extrémité supérieure de l'arbre d'entraînement du boisseau (non représenté).

L'arbre 18 est entraîné par un arbre auxiliaire 19, ou arbre de manoeuvre, dont la rotation est déterminée, dans un sens, par une action sur le levier 20 et, dans l'autre, par la détente d'un ressort spiral 21, analogue à celui 5.

Le ressort 21 est logé dans un boîtier, en deux parties et l'arbre 19 est lié en rotation à un piston 22.

Selon une autre caractéristique de l'invention, le piston 22 est disposé dans un boîtier en deux parties 23 et 24 dont celle 24, inférieure, forme le couvercle de la partie 25 renfermant le ressort 21. Les parties 23, 24 et 25 sont assemblées par des vis dont les axes sont matérialisés en 26 et 27 sur la figure 3.

La partie 24 présente un évidement circulaire 28, centré sur l'axe X'Y'de l'arbre 18, contenant un fluide visqueux et dans lequel peut tourner le piston 22.

Comme cela ressort des dessins, le piston 22 est constitué par un disque, s'ajustant dans l'alésage de l'évidement 28, tronqué selon deux lignes parallèles.

La rotation du piston 22 est limitée par deux pions 29 accolés contre la périphérie de l'évidement 28. La fixation de ces pions, ne posant pas de problème, n'est pas représentée sur les dessins.

Le piston 22 présente deux encoches 30. Chaque encoche est située sur l'angle de raccordement du chant circulaire 22a du piston et de l'un de ses chants rectilignes 22b. La partie 30a de l'encoche est circulaire et est concentrique aux chants 22a.

Les pions 29 et le piston 22 délimitent dans l'évidement 28 quatre chambres communiquant entre elles deux à deux par l'entremise d'un espace 31 .dont la section réduite est rigoureusement constante en fin de course du piston.

Le logement renfermant le piston 22 est rendu étanche par l'entremise de joints toriques tels que ceux 32.

## Revendications

1. Dispositif de commande d'une vanne comportant un ressort spiral (5), dont la détente provoque la rotation de l'arbre (2) d'entraînement du boisseau de la vanne, caractérisé en ce que l'arbre (3) d'entraînement de l'arbre (2) comporte un piston (10) disposé dans un logement étanche renfermant un fluide visqueux, ledit piston et ledit logement délimitant en coopération quatre chambres dont le volume varie lors de la rotation dudit piston ainsi que deux orifices (14) dont la section est très réduite en fin de course dudit piston, de façon à freiner le passage du fluide d'une chambre à l'autre.

2. Dispositif de commande selon la revendication 1 du genre de ceux comportant un boîtier, en deux parties(7) et (8), renfermant le ressort (5), caractérisé en ce que le logement précité est constitué par un évidement du fond de la partie inférieure (8) du boîtier obturé par un couvercle (11) fixé contre le fond de ladite partie.

3. Dispositif de commande selon la revendication 1, caractérisé en ce que le piston (22) est logé dans un boîtier en deux parties (23 et 24) dont celle inférieure (24) forme le couvercle du boîtier (25) renfermant le ressort (21) usuel.

4. Dispositif selon la revendication 3, caractérisé en ce que la partie (24), renfermant le piston, présente un évidement circulaire (28), ledit piston étant constitué par un disque, s'ajustant dans l'alésage de l'évidement (28), tronqué selon deux lignes parallèles.

5. Dispositif selon l'une quelconque des revendications 3 et 4, caractérisé en ce que la rotation du piston est limitée par, au moins, un pion (29) accolé contre la périphérie de l'évidement (28).

6. Dispositif selon la revendication 5, caractérisé en ce que le piston (22) présente, au moins, une encoche (30) située sur l'angle de raccordement de l'un de ses chants circulaires (22a) et de l'un de ses chants rectilignes (22b).

7. Dispositif selon la revendication 6, caractérisé en ce que l'un (30a) des chants de l'encoche (30) du piston est circulaire et concentrique au chant circulaire (22a) dudit piston de façon à ménager entre lui et le pion (29) un espace (31), réduit en fin de course du piston.

## Patentansprüche

1. Vorrichtung zur Steuerung eines Ventils, bestehend aus einer Wendel-Spiralfeder (5), durch deren Entspannung die Drehung der Welle (2) zum Antrieb des Ventilkegels ausgelöst wird, **dadurch gekennzeichnet,** **daß** die Antriebswelle (3) für die Welle (2) einen Kolben (10) besitzt, der in einer dichtschließenden, ein zähflüssiges Medium einschließenden Lagerung sitzt, wobei durch das Zusammenspiel zwischen Kolben und Lagerung die Begrenzungen von vier Kammern gebildet werden, deren Volumen sich je nach Drehung des Kolbens ändern, sowie zwei Öffnungen, (14) deren Querschnitt am Ende der Kolbendrehung sehr gering ist, sodaß der Durchfluß des Mediums von einer Kammer in die andere gebremst wird.

2. Steuervorrichtung nach Patentanspruch 1 von der Bauart, bei der die Feder (5) von dem aus zwei Teilen (7 und 8) bestehenden Gehäuse umschlossen ist, dadurch gekennzeichnet, daß die Lagerung aus einer Aushöhlung im Boden des unteren Teils (8) des mit einem am Boden des Unterteils befestigten Deckel (11) verschlossenen Gehäuses gebildet wird.

3. Steuervorrichtung nach Patentanspruch 1, dadurch gekennzeichnet, daß der Kolben (22) in einem aus zwei Teilen (23 und 24) bestehenden Gehäuse sitzt, wobei das Unterteil (24) den Deckel für das die übliche Feder (21) umfassende Gehäuse (25) bildet.

4. Steuervorrichtung nach Patentanspruch 3, dadurch gekennzeichnet, daß das den Kolben (22) umschließende Bauteil eine kreisförmige Aushöhlung (28) besitzt, wobei der Kolben aus einer Scheibe besteht, die in die Bohrung der Aushöhlung (28) paßt und zwei parallelen Linien entlang schmalgeschnitten ist.

5. Steuervorrichtung nach Patentanspruch 3 und 4, dadurch gekennzeichnet, daß der Kolben in seiner Drehbewegung durch mindestens einen an der Außenseite der Aushöhlung (28) angebrachten Stift (29) begrenzt ist.

6. Steuervorrichtung nach Patentanspruch 5, dadurch gekennzeichnet, daß der Kolben am Berührungswinkel zwischen einer seiner kreisbogenförmigen Außenkanten (22a) und einer seiner geradlinigen Seitenkanten (22b) mindestens eine Vertiefung (30) aufweist.

7. Steuervorrichtung nach Patentanspruch 6, dadurch gekennzeichnet, daß eine der Kanten (30a) der Vertiefung (30) im Kolben kreisförmig und konzentrisch zur kreisförmigen Außenkante (22a) des Kolbens ausgebildet ist, so daß zwischen ihr und dem Stift (29) ein am Ende der Kolbendrehung verkleinerter Zwischenraum entsteht.

## Claims

1. Device for controlling a valve comprising a spiral spring (5) whose pressure reduction provokes the rotation of the drive shaft (2) of the recipient of the valve, wherein the drive shaft (3) of the shaft (2) comprises a piston (10) disposed in a sealed housing containing a viscous fluid, said piston and said housing coooperate in delimiting four chambers whose volume varies when said piston is rotating, as well as two orifices (14) whose section is extremely reduced at the limit of travel of said piston so as to brake the passage of the fluid from one chamber to another.

2. Control device according to claim 1 and of the type comprising a box formed of two portions (7) and (8) containing the spring (5), wherein said housing is constituted by a recess of the bottom of the lower portion of the box (8) sealed by a cover (11) fixed against the bottom of said portion.

3. Control device according to claim 1, wherein, the piston (22) is housed in a box formed of two portions (23 and 24), the lower portion (24) forming the cover of the box (25) containing the usual spring (21).

4. Device according to claim 3, wherein the portion (24) containing the piston has a circular recess (28), said piston being constituted by a disk adjusting itself in the bore of the recess (28) truncated along two parallel lines.

5. Device according to claim 3 or 4, wherein the rotation of the piston is limited by at least one slug (29) placed against the periphery of the recess (28).

6. Device according to claim 5, wherein the piston (22) has at least one notch (30) situated on the connection angle of one of its circular edges (22a) and one of its rectilinear edges (22b).

7. Device according to claim 6, wherein one (30a) of the edges of the notch (30) of the piston is circular and concentric to the circular edge (22A) of said piston so as to provide between it and the slug (29) a space (31) reduced at the limit of travel of the piston.
